Europäisches Patentamt

European Patent Office

Office européen des brevets

(11) Numéro de publication : **0 506 587 A1**

# DEMANDE DE BREVET EUROPEEN

(21) Numéro de dépôt : **92420086.8**

(51) Int. Cl.⁵ : **A01K 63/04**

(22) Date de dépôt : **25.03.92**

(30) Priorité : **29.03.91 FR 9104142**

(43) Date de publication de la demande :
**30.09.92 Bulletin 92/40**

(84) Etats contractants désignés :
**AT BE CH DE ES FR GB IT LI NL SE**

(71) Demandeur : **RENA FRANCE (S.A.)**
**25, Avenue du Pont-de-Tasset, Z.I. Meythet**
**F-74000 Annecy (FR)**

(72) Inventeur : **Evreux, Gérard**
**Les Coteaux**
**F-74130 Ayze (FR)**
Inventeur : **Faure, Michel**
**Le Nivellard**
**F-74150 Moye (FR)**
Inventeur : **Orlu, Alain**
**11, Avenue Berthollet**
**F-74000 Annecy (FR)**

(74) Mandataire : **Gasquet, Denis**
**CABINET GASQUET, Les Pléiades, Park-Nord**
**Annecy**
**F-74370 Metz Tessy (FR)**

(54) **Dispositif de réglage de débit d'un liquide avec aérateur intégré.**

(57)    Dispositif de réglage de débit d'un liquide mis en circulation par une pompe (2), avec aérateur intégré, caractérisé en ce qu'il comprend essentiellement, en aval ou en amont de la pompe sur un conduit (6) parcouru par le liquide, un organe de réglage manoeuvrable (8) monté tournant autour d'un axe (9) perpendiculaire à la direction du conduit (6) et comportant un opercule (11) apte à obturer plus ou moins fortement ou libérer le conduit (6) selon la position angulaire de l'organe de réglage (8), cet organe étant percé longitudinalement d'au moins un canal d'admission d'air (13) débouchant dans la région de l'opercule (11).

FIG.1

EP 0 506 587 A1

Jouve, 18, rue Saint-Denis, 75001 PARIS

La présente invention concerne un dispositif de réglage de débit d'un liquide mis en circulation par une pompe, avec aérateur intégré.

Le problème de l'introduction d'air dans un liquide pompé, tel que de l'eau refoulée par une pompe hydraulique centrifuge, se pose notamment dans les domaines de l'aquariophilie, de la pisciculture, de l'horticulture, etc... en vue d'assurer un apport d'oxygène.

Dans ce genre d'applications, on prévoit habituellement des moyens spéciaux de réglage du débit de liquide, à prévoir notamment dans le cas où la pompe elle-même fournit un débit constant, et une prise d'air indépendante de ces moyens de réglage est disposée en un point du circuit parcouru par le liquide. La prise d'air peut posséder ses propres moyens de réglage de débit, sous forme d'une vanne - voir par exemple le document FR-A-2 601 555.

Ainsi, pour réaliser d'une part le réglage du débit de liquide, et d'autre part l'aération du liquide avec réglage éventuel du débit d'air, les composants nécessaires sont relativement nombreux, ce qui rend les réalisations actuel les assez compliquées, coûteuses et encombrantes.

La présente invention vise à éliminer ces inconvénients, en fournissant un dispositif de réglage de débit d'un liquide avec aérateur intégré, constituant vis-à-vis du problème considéré une solution simple, économique et permettant un gain d'encombrement, tout en offrant la possibilité d'un réglage du débit d'air indépendant de celui du débit de liquide.

A cet effet, le dispositif selon l'invention comprend essentiellement, en aval ou en amont de la pompe sur un conduit parcouru par le liquide, un organe de réglage manoeuvrable monté tournant autour d'un axe perpendiculaire à la direction du conduit et comportant un opercule apte à obturer plus ou moins fortement ou libérer le conduit selon la position angulaire de l'organe de réglage, cet organe étant percé longitudinalement d'au moins un canal d'admission d'air débouchant dans la région de l'opercule.

Ainsi, le dispositif objet de l'invention se caractérise par le faible nombre de composants mis en oeuvre, un même organe réalisable d'une seule pièce assurant la fonction de réglage du débit de liquide par l'orientation de l'opercule, et la fonction d'introduction d'air dans le liquide par un canal dont le débouché est situé de manière à créer un effet d'aspiration de l'air par le déplacement du liquide. De plus, toutes ces fonctions se trouvent concentrées en un même point, par exemple sur le conduit de refoulement de la pompe.

Selon une forme de réalisation préférée de l'invention, l'opercule de l'organe de réglage comporte sur l'une de ses faces une cavité, et le canal d'admission d'air débouche dans la cavité de l'opercule. Avantageusement, le canal d'admission d'air est situé en dehors de l'axe de rotation de l'organe de réglage de débit ; cette excentration du canal, combinée avec la cavité de l'opercule, favorise l'aspiration de l'air et son mélange avec le liquide mis en circulation par la pompe.

Dans un mode de réalisation perfectionné, le dispositif objet de l'invention comprend encore des moyens de réglage du débit d'air, disposés vers l'entrée d'un tube d'admission d'air raccordé au canal d'admission d'air de l'organe de réglage de débit de liquide. Ainsi, on peut effectuer un ajustage du débit d'air indépendant du réglage du débit de liquide. En outre, les moyens de réglage du débit d'air peuvent assurer une fonction de silencieux grâce à une configuration appropriée, de manière à supprimer le bruit provoqué par l'aspiration d'air.

De toute façon, l'invention sera mieux comprise à l'aide de la description qui suit, en référence au dessin schématique annexé représentant, à titre d'exemples non limitatifs, quelques formes d'exécution de ce dispositif de réglage de débit d'un liquide avec aérateur intégré :

Figure 1 est une vue d'ensemble montrant un dispositif de réglage conforme à la présente invention, associé à une pompe, en position d'obturation ;

Figure 2 est une vue similaire à figure 1, mais illustrant la position de réglage "débit maximum" ;

Figure 3 est une vue de détail, en perspective, de l'organe de réglage de débit et d'admission d'air ;

Figure 4 montre l'organe de figure 3, vu en bout et à l'état monté, en position d'obturation ;

Figure 5 est une vue similaire à figure 4, mais illustrant la position de réglage "débit maximum" ;

Figure 6 est une vue d'ensemble d'un dispositif de réglage conforme à la présente invention, pourvu de moyens de réglage du débit d'air ;

Figure 7 est une vue de détail, en coupe, des moyens de réglage du débit d'air dans le dispositif de figure 6.

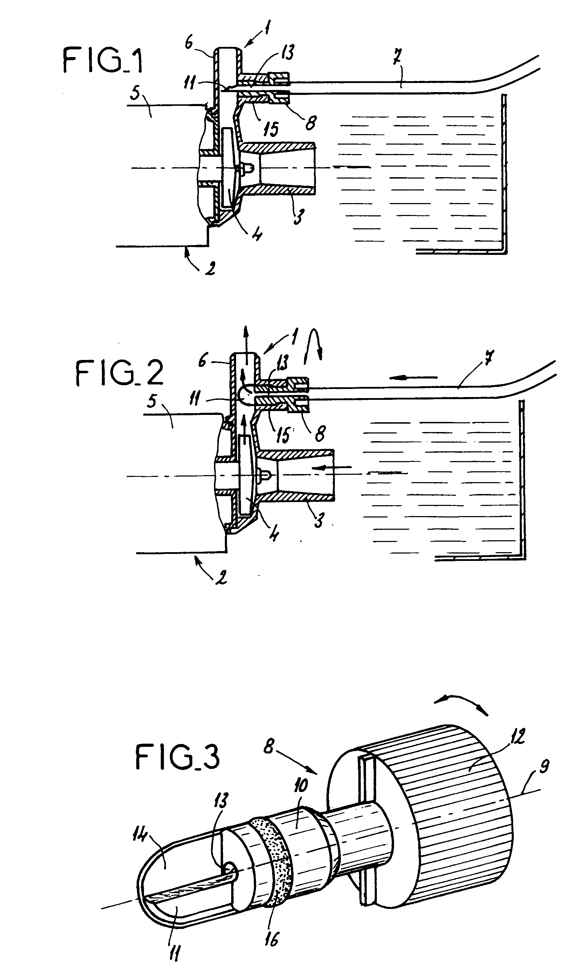

Comme le montrent les figures 1 et 2, le dispositif de réglage de débit, désigné globalement par le repère 1, est associé à une pompe hydraulique centrifuge 2, dont l'orifice central d'admission est indiqué en 3, et la turbine en 4, cette turbine 4 étant entraînée en rotation à vitesse constante par un moteur électrique 5 de type synchrone. Le dispositif de réglage de débit 1 est situé en aval de la pompe 2, sur le conduit de refoulement tangentiel 6 de cette pompe 2. Le réglage de débit s'effectue ainsi par l'obturation plus ou moins importante du conduit de refoulement 6, de manière à ajuster le débit de liquide en sortie de la pompe 2 aux besoins de l'utilisateur, le dispositif de réglage de débit 1, utilisé à cet effet, est combiné avec un tube souple d'admission d'air 7, permettant de mélanger une certaine quantité d'air avec le liquide refoulé par la pompe 2.

Le dispositif 1 comprend essentiellement un organe 8 de réglage de débit et d'admission d'air, représenté plus en détail sur la figure 3. L'organe 8 est monté tournant autour de son axe longitudinal 9, perpendiculaire à la direction du conduit de refoulement 6 de la pompe 2. Cet organe 8 comporte un corps cylindrique 10, prolongé à une extrémité par un opercule 11 en forme de palette, et pourvu à son extrémité opposée d'une tête élargie 12 dont la périphérie est moletée de manière à faciliter la manoeuvre de l'organe 8.

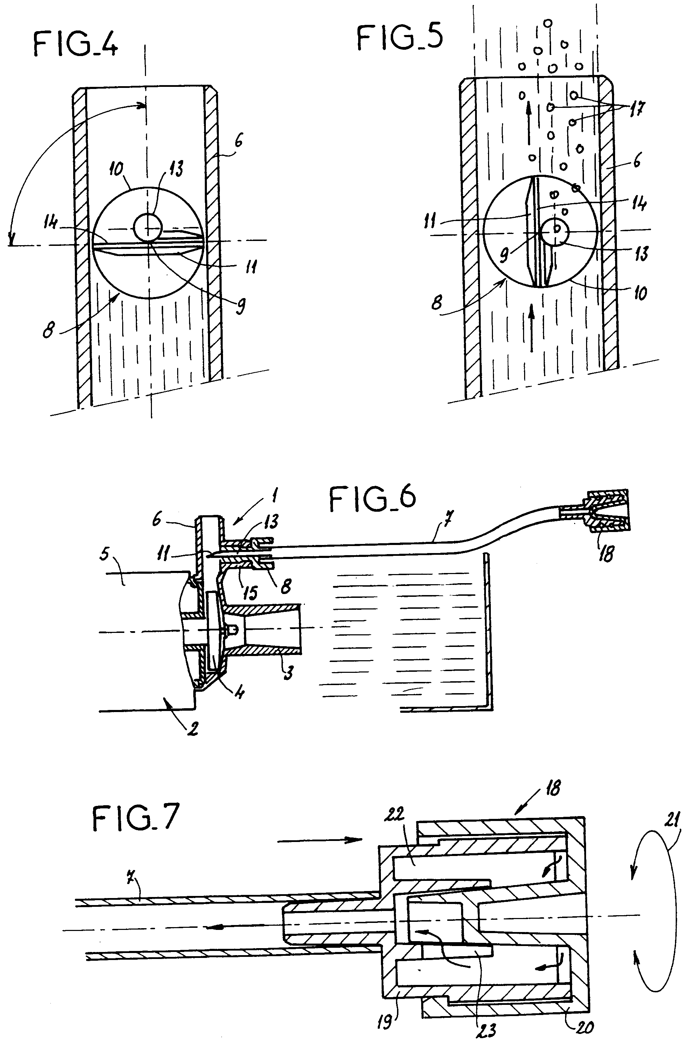

Le corps cylindrique 10 de l'organe 8 est percé longitudinalement d'un canal d'admission d'air 13, qui est excentré c'est-à-dire situé en dehors de l'axe 9 de l'organe 8, comme le montrent aussi les figures 4 et 5. L'extrémité postérieure du canal 13 est raccordée, en utilisation, au tube d'admission d'air 7. L'extrémité antérieure du canal 13 débouche dans une cavité 14 ménagée sur l'une des faces de l'opercule 11.

L'organe 8 de réglage de débit et d'admission d'air est monté tournant dans un prolongement latéral cylindrique 15 du conduit de refoulement 6 de la pompe 2, avec interposition d'un joint d'étanchéité 16. Le réglage de débit s'effectue, entre une position d'obturation complète du conduit 6 et une position "débit maximum", par une rotation de l'organe 8 sur un quart de tour autour de l'axe 9, toute position intermédiaire correspondant à une obturation partielle plus ou moins importante pouvant naturellement être obtenue.

En position d'obturation (figures 1 et 4), l'opercule 11 s'étend transversalement au conduit de refoulement 6 pour empêcher le passage du liquide. Le débouché du canal d'admission d'air 13 se situe en aval du plan de l'opercule 11, la cavité 14 étant elle-même tournée vers l'aval.

En position de réglage "débit maximum" (figures 2 et 5), l'opercule 11 est parallèle à l'axe du conduit de refoulement 6, autorisant ainsi le libre passage du liquide sur pratiquement toute la section de ce conduit 6. Lorsque la pompe 2 fait circuler le liquide, la vitesse de refoulement de ce liquide crée, dans le canal d'admission d'air 13, une dépression qui provoque l'aspiration de l'air et le mélange de l'air avec le liquide dans la région de la cavité 14, toujours tournée vers l'aval. Des bulles d'air amenées dans le liquide et entraînées par ce liquide sont indiquées en 17 sur la figure 5. En l'absence de dispositions particulières, le volume d'air ainsi aspiré et mélangé au liquide est proportionnel à la vitesse du liquide déplacé dans le conduit 6.

Toutefois, le débit d'air aspiré peut être ajusté indépendamment du débit de liquide par des moyens additionnels de réglage du débit d'air, désignés globalement par le repère 18 et indiqués aux figures 6 et 7.

Les moyens de réglage du débit d'air 18 sont disposés vers l'entrée du tube souple d'admission d'air 7, et dans l'exemple de réalisation considéré les moyens 18 assurent en outre une fonction de silencieux. Ces moyens 18 comprennent une première pièce 19 raccordée à l'extrémité du tube 7, et une seconde pièce 20 montée tournante sur la première pièce 19, comme illustré par une flèche 21. L'ensemble des deux pièces 19 et 20 forme des chicanes pour l'air admis, et délimite une chambre de détente 22 qui supprime les effets de bruit provoqués par l'aspiration d'air. La rotation de la pièce 20 par rapport à la pièce 19 obture plus ou moins fortement un passage 23 entre la chambre de détente 22 et l'entrée du tube 7, et elle assure ainsi le réglage du débit d'air aspiré par variation de la section du passage 23.

Le dispositif de réglage de débit avec aérateur intégré, précédemment décrit, s'applique notamment à une pompe à eau destinée à l'aquariophilie ou à l'horticulture, la pompe pouvant être immergée ou non.

Comme il va de soi, l'invention ne se limite pas à la seule forme d'exécution de ce dispositif de réglage de débit d'un liquide avec aérateur intégré qui a été décrite ci-dessus, à titre d'exemple ; elle en embrasse, au contraire, toutes les variantes de réalisation et d'application respectant le même principe. Ainsi, l'on ne s'éloignerait pas du cadre de l'invention par des modifications de détail, concernant notamment la conformation de l'organe de réglage de débit et d'admission d'air dont les moyens de manoeuvre peuvent être autres qu'une tête moletée. Le même dispositif peut être indifféremment situé en aval ou en amont de la pompe, et ce dispositif peut être associé à une pompe de tout type existant.

**Revendications**

1. Dispositif de réglage de débit d'un liquide mis en circulation par une pompe (2), avec aérateur intégré, caractérisé en ce qu'il comprend essentiellement, en aval ou en amont de la pompe sur un conduit (6) parcouru par le liquide, un organe de réglage manoeuvrable (8) monté tournant autour d'un axe (9) perpendiculaire à la direction du conduit (6) et comportant un opercule (11) apte à obturer plus ou moins fortement ou libérer le conduit (6) selon la position angulaire de l'organe de réglage (8), cet organe (8) étant percé longitudinalement d'au moins un canal d'admission d'air (13) débouchant dans la région de l'opercule (11).

2. Dispositif de réglage de débit d'un liquide avec aérateur intégré, selon la revendication 1, caractérisé en ce que l'opercule (11) de l'organe de réglage (8) comporte sur l'une de ses faces une cavité (14), et en ce que le canal d'admission d'air (13) débouche dans la cavité (14) de l'opercule (11).

3. Dispositif de réglage de débit d'un liquide avec aérateur intégré, selon la revendication 2, caractérisé en ce que le canal d'admission d'air (13) est situé en dehors de l'axe de rotation (9) de l'organe de réglage de débit (8).

4. Dispositif de réglage de débit d'un liquide avec aérateur intégré, selon l'une quelconque des revendications 1 à 3, caractérisé en ce qu'il comprend encore des moyens de réglage du débit d'air (18), disposés vers l'entrée d'un tube d'admission d'air (7) raccordé au canal d'admission d'air (13) de l'organe de réglage de débit précité (8).

5. Dispositif de réglage de débit d'un liquide avec aérateur intégré, selon la revendication 4, caractérisé en ce que les moyens de réglage du débit d'air (18), assurant aussi une fonction de silencieux, comprennent une première pièce (19) raccordée au tube d'admission d'air (7) et une seconde pièce (20) montée tournante sur la première, l'ensemble des deux pièces (19,20) formant des chicanes et une chambre de détente (22) pour l'air admis, et la rotation relative des deux pièces (19,20) permettant de faire varier la section d'un passage (23) entre la chambre de détente (22) et l'entrée du tube (7).

6. Dispositif de réglage de débit d'un liquide avec aérateur intégré, selon l'une quelconque des revendications 1 à 5, caractérisé en ce qu'il est situé sur le conduit de refoulement (6) d'une pompe hydraulique centrifuge (2).

FIG_1

FIG_2

FIG_3

# FIG_4

# FIG_5

# FIG_6

# FIG_7

Office européen
des brevets

**RAPPORT DE RECHERCHE EUROPEENNE**

Numero de la demande

EP     92 42 0086

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 443 335 (GULLACE) <br> * colonne 3, ligne 3 - ligne 15; figure 1 * <br> --- | 1 | A01K63/04 |
| A | US-A-4 655 915 (CARPINONE) <br> * colonne 2, ligne 46 - ligne 60 * <br> --- | 1 | |
| D,A | FR-A-2 601 555 (FAUCOUP) <br> * abrégé * <br> --- | 1 | |
| A | DE-U-8 702 789 (KSIENZYK) <br><br> ----- | | |
| | | | **DOMAINES TECHNIQUES RECHERCHES (Int. Cl.5)** |
| | | | A01K |

Le présent rapport a été établi pour toutes les revendications

| Lieu de la recherche | Date d'achèvement de la recherche | Examinateur |
|---|---|---|
| BERLIN | 15 MAI 1992 | SCHAEFFLER C.A.A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...........................................................................
& : membre de la même famille, document correspondant